# EUROPEAN PATENT APPLICATION

(11) **EP 1 867 908 A1**
(43) Date of publication of application: **19.12.2007**
(21) Application number: 07251465.6
(22) Date of filing: 02.04.2007
(51) Int. Cl.: F16L 37/091

(54) **Pipe coupling cartridges**

(30) Priority: 15.06.2006 GB 0611811
(71) Applicant: NORGREN LIMITED, Lichfield Staffordshire WS13 6SB (GB)
(72) Inventor: Aston, Paul Gerald, Stafford, ST16 3LB (GB)

(57) **Abstract**

A pipe coupling cartridge for insertion in a port bore comprising a body (14) having means to receive a pipe therein, the body (14) having a smaller external diameter portion (24) and a larger external diameter portion (25), the smaller diameter portion (24) having gripping means (27) and sealing means (28) mounted thereon and adapted to be received in the port bore (2, 3), wherein the larger diameter portion (25) forms a support means to be received within at least a tapered port bore (3). This invention also relates to a gripping means (27) comprising an annular ring having a first portion that extends substantially parallel to the radial direction and a second portion (35) that extends at an angle to the radial direction, wherein the gripping means (27) is secured to the cartridge (1) by its first portion which is held against the body (14) by a securing ring (32). An environmental seal (38) for preventing the ingress of foreign bodies into a port bore (2, 3) is also disclosed.

## Description

This invention relates to a pipe coupling cartridge adapted to be retained within bores having either straight walls or tapering walls. It also relates to a gripping means and a seal for such a cartridge.

Pipe coupling cartridges are known and comprise means to retain a pipe within a port of another device. The cartridge is usually used as an interface between the pipe and the other device that receives or transmits fluid along the pipe. These cartridges comprise a body having means to grip and seal against a pipe mounted within the body. The cartridge is installed within a port of the other device and then a pipe can be pushed into the cartridge body and the gripping means and sealing means grip and seal against the pipe. The cartridge thus grips and seals against both the port and the pipe.

A port receiving a cartridge typically comprises a straight cylindrical bore having parallel walls machined into an interface block or the like. Such cartridges and ports are commonly used in the automotive industry for use in pneumatic and hydraulic systems. Accordingly, the dimensions of the ports are defined in standards set by the Society of Automotive Engineers (SAE) for example. Thus, the cartridges are sized appropriately to fit securely in these standardised ports. The cartridges have sealing and gripping means mounted on their outwardly facing surface to engage with the walls of the port bore.

Cartridges may also be used to couple a device and a pipe wherein the port does not conform to standard dimensions or where the port is bespoke. These ports may be die-cast and typically comprises a tapered bore and not a straight bore as with the machined ports described above. The use of the same cartridge in both a straight bore port and a tapered bore port is problematic. As can be appreciated, when a standard cartridge is inserted into a tapered bore, the cartridge will not be held tightly because of the diverging walls. This makes the cartridge more prone to becoming loose due to vibration and the like. Similarly, it is difficult to ensure that a good seal is obtained between the port and the cartridge, because a seal that fits a parallel bore may not seal against a tapered bore. On the other hand, as seal that seals a tapered bore may be difficult to insert in a straight bore, as it may need to be compressed substantially. Further, it is difficult to ensure the cartridge is held securely in a tapered bore, partly because of the taper, but also because of the difference in the surface of the bore. As the ports having tapered bores are typically die-cast, the walls of the bore are textured and the metal has a "skin", as it is known in the art, which is difficult for the gripping means on the cartridge to engage with.

According to a first aspect of the invention, we provide a pipe coupling cartridge comprising a body having means to receive a pipe therein, the body being adapted to be inserted within a port bore, the cartridge body having a smaller external diameter portion and a larger external diameter portion, the smaller diameter portion having gripping means and sealing means mounted thereon and adapted to be received in the port bore, wherein the larger diameter portion forms a support means to be received within at least a tapered port bore.

The support means allows the cartridge to be used in either a parallel walled port bore or in a tapered bore, for example. In a parallel bore the smaller diameter portion is received in the bore and the sealing and gripping means carried thereon makes sealing and gripping contact with the walls of the port. When the cartridge of the invention is inserted into a port having tapered walls, the smaller diameter portion is received in the port as described above. However, the larger diameter support means is also received in the port bore to ensure the cartridge is securely held therein. Thus, the distal end of the cartridge contacts the bore adjacent the base and the support means is adapted to contact the port bore walls adjacent the mouth of the bore. Thus, the cartridge makes contact with the tapered bore over a sufficient proportion of its length to prevent the cartridge from vibrating free of the port, thereby leading to a more secure design.

Preferably the support means is located adjacent the small diameter portion. Preferably, the smaller diameter portion has parallel external walls. This ensures that is fits securely in a parallel walled port bore.

Preferably, the sealing means comprises an O-ring. Preferably the gripping means comprises a grab ring.

Preferably a further seal is provided on the cartridge body to prevent the ingress of moisture and dirt into the port bore. Preferably such an environmental seal is mounted on the body between the gripping and sealing means and the support means. Locating the environmental seal outwardly of the support means and inwardly of the sealing and gripping means ensures that it can reliably seal against both the walls of a parallel and tapering port bore. Accordingly it is advantageous to mount the environmental seal inwardly of, but adjacent, the gripping means.

Preferably the gripping means comprises an annular ring having a first portion that extends parallel to the radial direction and a second portion that extends at an angle to the radial direction. The first portion of the gripping means may be held against the body by a securing ring. Preferably the securing ring is of plastics. Preferably the securing ring is split. Preferably the securing ring urges a portion of the gripping means against a ledge formed on the body of the outside surface of the coupling cartridge.

According to a second aspect of the invention, we provide a gripping means in combination with a pipe coupling cartridge for securing the coupling cartridge within a port bore, the gripping means being adapted to be mounted on the outside surface of the coupling cartridge, and comprising an annular ring having a first portion that extends substantially parallel to the radial direction and a second portion that extends at an angle to the radial direction, wherein the gripping means is secured to the cartridge by its first portion which is held against the body by a securing ring.

The shape of the gripping means and how it is mounted to the cartridge by the securing ring is advantageous, as it easy to assemble onto the cartridge and provides a secure engagement even when the cartridge is subject to vibration.

Preferably the inclined second portion includes teeth having a sharp engaging edge.

Preferably the securing ring is of plastics. Preferably the securing ring is split. This makes assembly of the cartridge easy.

Preferably the securing ring urges the first portion of the gripping means against a ledge formed on the outside surface of the coupling cartridge.

Preferably the inclined second portion of the gripping means is inclined between 20° and 60° to the radial direction and most preferably between 30° and 45° .

According to a third aspect of the invention, we provide an environmental seal in combination with a pipe coupling cartridge for preventing the ingress of foreign bodies into a port bore in which the coupling cartridge is adapted to be received, the coupling cartridge having sealing means and gripping means for gripping and sealing against the port, wherein the environmental seal is mounted inwardly of the gripping and sealing means.

The use of an environmental seal in addition to the conventional port sealing means is advantageous as it prevents corrosion and damage being caused to the gripping and sealing means thereby ensuring that the coupling cartridge is reliable.

Preferably the gripping and sealing means is mounted toward an end of the coupling cartridge. Preferably the environmental seal is mounted inwardly of and adjacent to the gripping and sealing means.

There now follows by way of example only a detailed description of the present invention with reference to the accompanying drawings in which;
Figure 1 shows a coupling cartridge mounted within a straight port bore having parallel walls; and
Figure 2 shows the coupling cartridge mounted within a tapered bore.

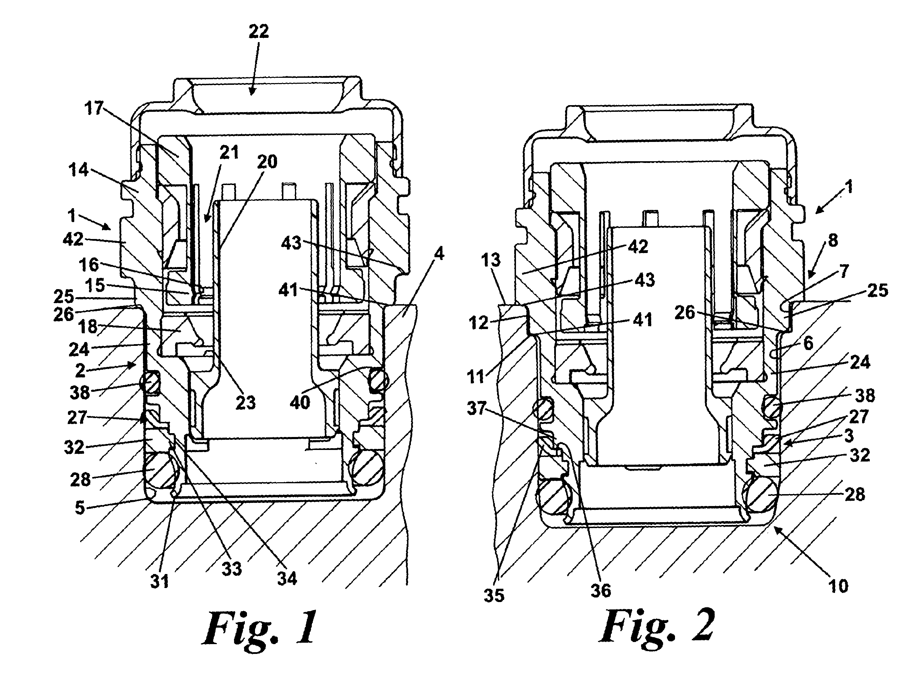

Figures 1 and 2 show a pipe coupling cartridge 1. The cartridge 1 is adapted to be mounted within a port 2, 3 of an interface block 4, 13. The term "interface block" is intended to describe any body that has a port 2, 3 formed therein for receiving the cartridge 1 and may be the body of a pressure generator, a fluid source, a hydraulic device or a control means, for example.

The port 2 comprises a straight bore having parallel walls 5. The port 2 is formed by machining of the aluminium interface block 4. The port 3 comprises a tapered bore having tapering walls 6 where the diameter of the bore decreases from the mouth 8 to the base 10. The port 3 includes a larger diameter part 12 adjacent the mouth 8 of the bore and separated from the tapered part 6 by a ledge 11. The port 3 is formed by die-casting of the interface block 13. As will be known to those familiar with die-casting, the walls 6 of the die-cast port 3 will be textured and the metal will have a "skin" thereon. This makes forming an effective seal and securely retaining the cartridge 1 in the port 3 difficult. It will be appreciated that although the ports 2, 3 are shown as blind bores in the Figures, they in fact allow communication between a pipe that is inserted into the cartridge 2 and device within which the port is formed.

The cartridge 1 comprises a tubular body 14 that houses gripping means 15 in the form of a collet having gripping points 16 to engage a tube (not shown). The collet 15 also includes a cylindrical collar 17 that allows it to be disengaged from the tube. The body 14 also houses sealing means 18 in the form of a lip seal and tube support means 20. The tube (not shown) is inserted in the direction of arrow 22 until it abuts shoulder 23. The tube support member 20 extends within the tube and supports the tube while the gripping points 16 and lip seal 18 engage the outside surface of the tube.

The external surface of the cartridge 1 includes a smaller diameter portion 24 and a larger diameter portion 25 separated by a ledge 26. The smaller diameter portion 24 carries gripping means 27 and sealing means 28. The sealing means 28 comprises an O-ring that is mounted in a concave circumferential groove 30 in the smaller diameter portion 24 adjacent its end 31. A securing ring 32 separates the O-ring 28 from the gripping means 27. The securing ring 32 comprises a split annular member of substantially rectangular cross-section having a locating ridge 33 extending radially inwardly from the inwardly facing surface of the securing ring 32. The locating ridge is adapted to be received within a corresponding locating groove 34 in the smaller diameter portion 24. The securing ring 32 is of plastics.

The gripping means 27 comprises an annular ring of metal that first extends radially outwardly and then extends at an angle to the radial direction. The inclined portion 35 of the gripping means 27 has slots therein such that teeth are formed to engage the walls 5, 6 of the ports 5, 6. The inclined portion 35 is such that the teeth are angled towards the mouth 8 of the port 2, 3 when the cartridge 1 is inserted therein. Thus, the teeth will engage the walls of the port 2, 3 and securely retain the cartridge on application of forces that would urge the cartridge out of the port 2, 3. The radially extending part 36 of the gripping means 27 abuts a stop 37 in the form of a ledge that extends from the smaller diameter portion 24. Thus, the gripping means 27 is held between stop 37 and securing ring 32.

The smaller diameter portion 24 also carries a further seal 38 that is an environmental seal to prevent the ingress of moisture, dirt or other foreign bodies into the port 2, 3, which may lead to corrosion of the gripping means 27 or deterioration of the sealing of O-ring 28. The environmental seal 38 is retained in a groove 40.

The larger diameter portion 25 forms a support means and is located adjacent the smaller diameter portion 24 and separated therefrom by a step 41. The body 14 includes an annular abutment portion 42 adjacent the support means 25. The abutment part 42 has a still larger external diameter than the support means 25. The abutment portion 42 includes an abutment face 43.

The straight port 2 is of standardised dimensions, and the smaller diameter portion 24 is sized appropriately to be received therein. The O-ring seal 28 thus form a seal with walls 5. The inclination of the teeth of the gripping means 27 allows the cartridge to slide into the port 2 with minimal resistance. The environmental seal 38 also contacts and forms a seal with the walls 5. The cartridge 1 is inserted until the ledge 26 of the support means 25 abuts the interface block 4 adjacent the mouth 8 of the port 2.

Figure 2 shows how the cartridge 1 is adapted to be received within the port 3 having tapered walls 6. As described above, in relation to the straight walled bore 2, the seals 28, 38 and gripping means 27 engage the tapered walls 6. However, when the cartridge 1 is mounted in the tapered port 3, the support means 25 is received within the port 3 it is the abutting surface 43 that abuts the interface block 4 adjacent the mouth 8 of the port 3. The support means 25 and the larger diameter part 12 of the port 3 are adapted to interengage securely. Thus, the smaller diameter portion 24 is sized to be able to fit securely within the narrowest part of the tapered port bore 3, adjacent the base 10, and the support means is sized to fit securely within the larger diameter part 12, adjacent the mouth 8. It will be appreciated that the sealing and gripping means 27, 38, 48 are positioned toward the distal end of the cartridge 1 so that they are able to engage the tapering walls 6 of the port 3 before they have diverged too much for an effective seal and engagement to be made. Due to the larger diameter of the support means 25, it can engage the walls 6 at point where they have diverged, thereby preventing the cartridge 1 from moving in the port 3 and potentially working itself free.

This arrangement allows the same cartridge 1 to be used in both straight ports and tapered ports, as the larger and smaller diameter portions 24, 25 allow the cartridge 1 to be held tightly in both types of port 2, 3.

## Claims

1. A pipe coupling cartridge comprising a body (14) having means to receive a pipe therein, the body (14) being adapted to be inserted within a port bore (2, 3), the cartridge body (14) having a smaller external diameter portion (24) and a larger external diameter portion (25), the smaller diameter portion (24) having gripping means (27) and sealing means (28) mounted thereon and adapted to be received in the port bore, wherein the larger diameter portion (25) forms a support means to be received within at least a tapered port bore (3).

2. A pipe coupling cartridge according to claim 1, in which the support means (25) is located adjacent the small diameter portion (24).

3. A pipe coupling cartridge according to claim 1 or claim 2, in which the smaller diameter portion (24) has parallel external walls.

4. A pipe coupling cartridge according to any preceding claim, in which the sealing means (28) comprises an O-ring.

5. A pipe coupling cartridge according to any preceding claim, in which the gripping means (27) comprises a grab ring.

6. A pipe coupling cartridge according to any preceding claim, in which a further seal (38) is provided on the cartridge body (14) to prevent the ingress of moisture and dirt into the port bore.

7. A pipe coupling cartridge according to any preceding claim, in which the further seal (38) is mounted on the body (14) between the gripping means (27) and sealing means (28) and the support means (25).

8. A pipe coupling cartridge according to any preceding claim, in which the further seal (38) is mounted inwardly of, but adjacent, the gripping means (27).

9. A pipe coupling cartridge according to any preceding claim, in which the gripping means (27) comprises an annular ring having a first portion that extends parallel to the radial direction and a second portion (35) that extends at an angle to the radial direction.

10. A pipe coupling cartridge according to claim 9, in which the first portion of the gripping means (27) is held against the body (14) by a securing ring (32).

11. A pipe coupling cartridge according to claim 10, in which the securing ring (32) is of plastics.

12. A pipe coupling cartridge according to claim 10 or claim 11, in which the securing ring (32) is split.

13. A pipe coupling cartridge according to any of claims 10 to 13, in which the securing ring (32) urges a portion of the gripping means (27) against a ledge (37) formed on the body (14) of the outside surface of the coupling cartridge (1).

14. A gripping means in combination with a pipe coupling cartridge for securing the coupling cartridge (1) within a port bore (2, 3), the gripping means (27) being adapted to be mounted on the outside surface of the coupling cartridge (1), and comprising an annular ring having a first portion that extends substantially parallel to the radial direction and a second portion (35) that extends at an angle to the radial direction, wherein the gripping means (27) is secured to the cartridge (1) by its first portion which is held against the body (14) by a securing ring (32).

15. A gripping means in combination with a pipe coupling cartridge according to claim 14, in which the inclined second portion (35) includes teeth having a sharp engaging edge.

16. A gripping means in combination with a pipe coupling cartridge according to claim 14 or claim 15, in which the securing ring (32) is of plastics.

17. A gripping means in combination with a pipe coupling cartridge according to claim 16, in which the securing ring (32) is split.

18. A gripping means in combination with a pipe coupling cartridge according to any of claims 14 to 17, in which the securing ring (32) urges the first portion of the gripping means (27) against a ledge (37) formed on the outside surface of the coupling cartridge (1).

19. A gripping means in combination with a pipe coupling cartridge according to any of claims 14 to 18, in which the inclined second portion (35) of the gripping means (27) is inclined between 20° and 60° to the radial direction.

20. A gripping means in combination with a pipe coupling cartridge according to any of claims 14 to 19, in which the inclined second portion (35) of the gripping means (27) is inclined between 30° and 45° to the radial direction.

21. An environmental seal in combination with a pipe coupling cartridge for preventing the ingress of foreign bodies into a port bore (2, 3) in which the coupling cartridge (1) is adapted to be received, the coupling cartridge (1) having sealing means (28) and gripping means (27) for gripping and sealing against the port, wherein the environmental seal (38) is mounted inwardly of the gripping and sealing means.

22. An environmental seal in combination with a pipe coupling cartridge according to claim 21, in which the gripping means (27) and sealing means (28) is mounted toward an end of the coupling cartridge (1).

23. An environmental seal in combination with a pipe coupling cartridge according to claim 21 or claim 22, in which the environmental seal (38) is mounted inwardly of and adjacent to the gripping means (27) and sealing means (28).
